# EUROPÄISCHE PATENTANMELDUNG

(11) **EP 4 778 396 A1**
(43) Veröffentlichungstag der Anmeldung: **22.07.2026**
(21) Anmeldenummer: 25223701.1
(22) Anmeldetag: 16.12.2025
(51) Int. Cl.: A23B 2/40

(54) **ANLAGE ZUR ERHITZUNG VON FLÜSSIGEN LEBENSMITTELN**

(30) Priorität: 15.01.2025 DE 102025101260
(71) Anmelder: KRONES Aktiengesellschaft, 93073 Neutraubling (DE)
(72) Erfinder: Oehmichen, Dr. Thomas, 93073 Neutraubling (DE); Scherer, Christoph Hans, 93073 Neutraubling (DE); Hoeller, Stefan, 93073 Neutraubling (DE)
(74) Vertreter: Grünecker Patent- und Rechtsanwälte PartG mbB

(57) **Zusammenfassung**

Anlage (1) zur Erhitzung von flüssigen Lebensmitteln, insbesondere zur Direkterhitzung von flüssigen Lebensmitteln, umfassend eine Erhitzungsvorrichtung (2), die dazu ausgebildet ist, ein flüssiges Lebensmittel mittels Dampf zu erhitzen, eine Kühlvorrichtung (4), die dazu ausgebildet ist, das erhitzte flüssige Lebensmittel, insbesondere durch Flash-Kühlen, abzukühlen, eine Zirkulationsvorrichtung (5), die dazu ausgebildet ist, bei der Abkühlung des flüssigen Lebensmittels entstehenden Dampf von der Kühlvorrichtung (4) zu der Erhitzungsvorrichtung (2) zu führen, wobei die Zirkulationsvorrichtung (5) eine Verdichtungsvorrichtung (6) zum Verdichten des Dampfes, einen ersten Leitungsabschnitt (7a), der zwischen der Kühlvorrichtung (4) und der Verdichtungsvorrichtung (6) angeordnet ist und einen zweiten Leitungsabschnitt (7b), der zwischen der Verdichtungsvorrichtung (6) und der Erhitzungsvorrichtung (2) angeordnet ist, umfasst, wobei alle Komponenten der Zirkulationsvorrichtung (5) in einem gemeinsamen Cleaning in Place, CIP, Prozess gereinigt werden können.

## Beschreibung

### Technisches Gebiet

Die vorliegende Erfindung betrifft eine Anlage zur Erhitzung von flüssigen Lebensmitteln, insbesondere zur Direkterhitzung von flüssigen Lebensmitteln. Die Erfindung betrifft weiterhin ein Verfahren zur Reinigung einer Anlage zur Erhitzung von flüssigen Lebensmitteln.

### Hintergrund

Es ist bekannt, hitzeempfindliche flüssige Lebensmittelprodukte mittels UHT (Ultrahochtemperatur-Erhitzung) haltbar zu machen. Insbesondere ist es bekannt, Lebensmittelprodukte mittels direkter Erhitzung durch Dampf zu erhitzen und anschließend wieder durch Flash-Kühlen, also durch Abkühlen mit Unterdruck unter Abzug von Dampf, abzukühlen. Eine direkte Erhitzung durch Dampf hat den Vorteil, dass die Lebensmittel schnell auf die benötigte Behandlungstemperatur erhitzt werden können und schnell wieder herabgekühlt werden können, wenn sie die benötigte Zeit heiß gehalten wurden.

Der beim Flash-Kühlen entstehende Dampf, auch als Brüden bekannt, wurde in herkömmlichen Anlagen typischerweise in die Umwelt abgegeben. Um Energie und Ressourcen zu sparen, wurden in jüngerer Zeit Anlagen entwickelt, bei denen der Brüden wiederverwendet wird.

So ist aus der WO 2024/134503 A1 eine Vorrichtung zur UHT-Behandlung von flüssigen Lebensmitteln mittels Dampfinfusion oder Dampfinjektion bekannt, bei der der Brüden durch einen Kompressor verdichtet, dabei erhitzt, und dann zurück in die Infusions- oder Injektionskammer geleitet wird. Die WO 2024/134503 A1 führt aus, dass der Kompressor aseptisch und/oder hygienisch ausgebildet ist, wobei insbesondere die Oberflächenrauhigkeit der inneren Oberflächen gering genug und die inneren Radien des Kompressors groß genug sind, um Cleaning in Place (CIP) Prozesse zu erleichtern, so dass das Innere des Kompressors gereinigt werden kann, ohne ihn auseinanderbauen zu müssen.

Der Brüden enthält neben Wasserdampf oft auch organische Rückstände, die aus dem flüssigen Lebensmittel stammen. Die Erfinder der vorliegenden Anmeldung haben erkannt, dass sich diese Rückstände an allen Oberflächen innerhalb der Anlage, die mit dem Brüden in Kontakt kommen, ablagern können. Somit können möglicherweise auch Verunreinigungen von den Ablagerungen in die Injektions- oder Infusionskammer gelangen. Die vorliegende Erfindung stellt sich daher die Aufgabe, eine verbesserte hygienische Anlage zur Behandlung von flüssigen Lebensmitteln zur Verfügung zu stellen.

### Zusammenfassung

Diese Aufgabe wird gelöst durch eine Anlage gemäß Anspruch 1 und ein Verfahren gemäß Anspruch 7. Weitere Ausführungsformen sind in den abhängigen Ansprüchen beschrieben.

Die Anlage ist eine Anlage zur Erhitzung von flüssigen Lebensmitteln, insbesondere zur Direkterhitzung von flüssigen Lebensmitteln, und umfasst eine Erhitzungsvorrichtung, die dazu ausgebildet ist, ein flüssiges Lebensmittel mittels Dampf zu erhitzen, eine Kühlvorrichtung, die dazu ausgebildet ist, das erhitzte flüssige Lebensmittel, insbesondere durch Flash-Kühlen, abzukühlen, und eine Zirkulationsvorrichtung, die dazu ausgebildet ist, bei der Abkühlung des flüssigen Lebensmittels entstehenden Dampf bzw. Brüden zumindest teilweise von der Kühlvorrichtung zu der Erhitzungsvorrichtung zu führen. Die Zirkulationsvorrichtung umfasst dabei eine Verdichtungsvorrichtung zum Verdichten des Dampfes bzw. des Brüdens, einen ersten Leitungsabschnitt, der zwischen der Kühlvorrichtung und der Verdichtungsvorrichtung angeordnet ist, sowie einen zweiten Leitungsabschnitt, der zwischen der Verdichtungsvorrichtung und der Erhitzungsvorrichtung angeordnet ist. Alle Komponenten der Zirkulationsvorrichtung können bei der Anlage in einem gemeinsamen Cleaning in Place, CIP, Prozess gereinigt werden.

Dadurch, dass der erste Leitungsabschnitt, die Verdichtungsvorrichtung und der zweite Leitungsabschnitt in einem gemeinsamen CIP-Prozess gereinigt werden können, ist eine effiziente und gründliche Reinigung möglich. Insbesondere können damit alle Bereiche gereinigt werden, die direkten Kontakt mit dem Brüden haben, so dass Ablagerungen von organischen Rückständen in diesen Bereichen effizient entfernt werden können. Insbesondere erlaubt diese Ausbildung der Anlage eine Reinigung zwischen den Behandlungen unterschiedlicher flüssiger Lebensmittel ohne dass die Anlage auseinandergebaut werden muss.

Die Erhitzungsvorrichtung kann dazu ausgebildet sein, das flüssige Lebensmittel durch eine direkte Erhitzung auf eine Behandlungstemperatur zu erhitzen. Das direkte Erhitzen kann insbesondere durch direktes Erhitzen durch Wasserdampf ausgeführt werden. Das direkte Erhitzen kann beispielsweise durch Dampfinfusion oder Dampfinjektion ausgeführt werden. Die Erhitzungsvorrichtung kann insbesondere einen Mischraum oder Dampfinfusionsbehälter umfassen oder als solcher ausgebildet sein, in dem sich Wasserdampf und Lebensmittelprodukt mischen können, sodass das Lebensmittelprodukt die Behandlungstemperatur erreicht. Die Behandlungstemperatur kann beispielsweise zwischen 100°C und 150°C liegen, insbesondere für eine UHT-Behandlung zwischen 130°C und 150°C liegen. Es ist möglich, dass die Anlage eine Vorwärmevorrichtung umfasst, die dazu ausgebildet ist, das flüssige Lebensmittel vor dem Eintritt in die Erhitzungsvorrichtung auf eine Eintrittstemperatur zu erwärmen. Die Eintrittstemperatur kann beispielsweise 80°C betragen.

Die Anlage kann weiterhin eine Dampferzeugungsvorrichtung umfassen. Alternativ kann die Anlage mit einer solchen Vorrichtung verbunden sein. Die Dampferzeugungsvorrichtung kann dazu ausgebildet sein, erhitzten Wasserdampf zu erzeugen. Insbesondere kann die Dampferzeugungsvorrichtung dazu ausgebildet sein, Wasserdampf zu erzeugen, mit dem das flüssige Lebensmittel in der Erhitzungsvorrichtung durch Dampfinfusion oder Dampfinjektion auf die Behandlungstemperatur erhitzt wird. Die Dampferzeugungsvorrichtung kann mit der Erhitzungsvorrichtung und/oder der Zirkulationsvorrichtung verbunden sein.

Es ist möglich, dass zwischen der Erhitzungsvorrichtung und der Kühlvorrichtung eine Heißhaltestrecke angeordnet ist, die dazu ausgebildet ist, das flüssige Lebensmittel über einen bestimmten Zeitraum auf der Behandlungstemperatur zu halten.

Die Verdichtungsvorrichtung ist dazu ausgebildet, den aus der Kühlvorrichtung stammenden Dampf bzw. Brüden zu verdichten. Durch die Verdichtung wird der Dampf bzw. Brüden gemäß der thermischen Zustandsgleichung, also näherungsweise gemäß der allgemeinen Gasgleichung, erhitzt. Insbesondere ist der Verdichtungsvorrichtung dazu ausgebildet, den Dampf bzw. Brüden auf eine Temperatur zu erhitzen, mit der das flüssige Lebensmittelprodukt in der Erhitzungsvorrichtung auf die Behandlungstemperatur erhitzt werden kann.

Die Zirkulationsvorrichtung ist somit derart ausgebildet, dass im Betrieb Dampf bzw. Brüden von der Kühlvorrichtung durch den ersten Leitungsabschnitt zu der Verdichtungsvorrichtung strömt, der Dampf bzw. Brüden in der Verdichtungsvorrichtung komprimiert und dadurch erhitzt wird, und der Dampf bzw. Brüden anschließend von der Verdichtungsvorrichtung durch den zweiten Leitungsabschnitt zu der Erhitzungsvorrichtung strömt. Dieser Betrieb der Zirkulationsvorrichtung wird im Folgenden auch als "Normalbetrieb" bezeichnet.

Diese Flussrichtung eines Fluides in der Zirkulationsvorrichtung, also durch den ersten Leitungsabschnitt, durch die Verdichtungsvorrichtung und abschließend durch den zweiten Leitungsabschnitt, wird im Folgenden auch als "Vorwärtsrichtung" bezeichnet. Analog dazu wird eine Flussrichtung eines Fluides in der entgegengesetzten Richtung, also durch den zweiten Leitungsabschnitt, durch die Verdichtungsvorrichtung und abschließend durch den ersten Leitungsabschnitt, als "Rückwärtsrichtung" bezeichnet. Der Begriff Fluid umfasst hier gemäß seiner normalen Bedeutung sowohl Gase als auch Flüssigkeiten.

Die Zirkulationsvorrichtung kann so betrieben werden, dass ein Fluid in der Zirkulationsvorrichtung in Vorwärtsrichtung transportiert wird. Dieser Betrieb der Zirkulationsvorrichtung wird im Folgenden auch als "Vorwärtsbetrieb" bezeichnet. Es ist möglich, dass die Zirkulationsvorrichtung auch so betrieben werden kann, dass ein Fluid in der Zirkulationsvorrichtung in Rückwärtsrichtung transportiert wird. Dieser Betrieb der Zirkulationsvorrichtung wird im Folgenden auch als "Rückwärtsbetrieb" bezeichnet.

Die Verdichtungsvorrichtung kann einen oder mehrere Kompressoren umfassen. Insbesondere kann die Verdichtungsvorrichtung einen oder mehrere Impeller umfassen. Falls die Verdichtungsvorrichtung einen Kompressor umfasst, so strömt im Betrieb der Zirkulationsvorrichtung Dampf bzw. Brüden von der Kühlvorrichtung in einen Einlass des Kompressors, wird im Kompressor verdichtet, und strömt dann von einem Auslass des Kompressors zu der Erhitzungsvorrichtung. Falls die Verdichtungsvorrichtung mehrere Kompressoren umfasst, können die Kompressoren hintereinander, also in Reihe, angeordnet sein. Dabei strömt im Betrieb Dampf bzw. Brüden aus der Kühlvorrichtung in einen Einlass des ersten Kompressors in der Reihe, wird im ersten Kompressor verdichtet, strömt dann von einem Auslass des ersten Kompressors in der Reihe zu einem Einlass eines zweiten Kompressors in der Reihe und wird im zweiten Kompressor weiter verdichtet. Dies wiederholt sich für alle Kompressoren in der Reihe. Von einem Auslass des letzten Kompressors in der Reihe strömt der Dampf bzw. Brüden zu der Erhitzungsvorrichtung.

Sollte die Verdichtungsvorrichtung mehrere Kompressoren aufweisen, so können alle Kompressoren sowie eventuell zwischen den Kompressoren angeordnete Leitungsabschnitte zusammen mit dem ersten Leitungsabschnitt und dem zweiten Leitungsabschnitt in einem gemeinsamen CIP-Prozess gereinigt werden.

Der erste Leitungsabschnitt kann von einem Kopfbereich der Kühlvorrichtung zu der Verdichtungsvorrichtung führen. Da der Dampf bzw. Brüden in der Kühlvorrichtung nach oben steigt, kann so eine effiziente Weiterleitung des Dampfs bzw. des Brüdens in die Zirkulationsvorrichtung erfolgen. Der zweite Leitungsabschnitt kann von der Verdichtungsvorrichtung zu einem Bereich der Erhitzungsvorrichtung führen. Beispielsweise kann es sich hierbei um einen oberen Bereich der Erhitzungsvorrichtung handeln. Dies erlaubt eine effiziente Einleitung des verdichteten Dampfes bzw. des verdichteten Brüdens in die Erhitzungsvorrichtung, da dort der Dampf üblicherweise im oberen Bereich der Erhitzungsvorrichtung eingebracht wird. Alternativ oder zusätzlich kann es sich bei dem Bereich der Erhitzungsvorrichtung um einen Einlass der Erhitzungsvorrichtung handeln.

Falls die Verdichtungsvorrichtung mehrere Kompressoren umfasst, so kann der erste Leitungsabschnitt von dem Kopfbereich der Kühlvorrichtung zu einem Einlass des ersten Kompressors führen. Der zweite Leitungsabschnitt kann in diesem Fall von einem Auslass des letzten Kompressors zu der Erhitzungsvorrichtung, insbesondere zu einem oberen Bereich der Erhitzungsvorrichtung, führen.

Der erste Leitungsabschnitt kann einen größeren Durchmesser aufweisen als der zweite Leitungsabschnitt. Der erste Leitungsabschnitt kann insbesondere als Niederdruckleitung ausgebildet sein. Der zweite Leitungsabschnitt kann insbesondere als Hochdruckleitung ausgebildet sein.

Die Anlage kann eine Zufuhrmöglichkeit und/oder eine Abführmöglichkeit für ein Reinigungsmittel in den ersten Leitungsabschnitt umfassen. Alternativ oder zusätzlich kann die Anlage eine Zufuhrmöglichkeit und/oder eine Abführmöglichkeit für ein Reinigungsmittel in den zweiten Leitungsabschnitt umfassen. Beispielsweise können in dem ersten und oder dem zweiten Leitungsabschnitt Anschlüsse zu Zuführ- bzw. Abführleitungen vorhanden sein, mit denen ein Reinigungsmittel in den ersten und/oder in den zweiten Leitungsabschnitt ein- bzw. ausgeleitet geleitet werden kann. Dadurch, dass in dem ersten und/oder zweiten Leitungsabschnitt Zu- bzw. Abfuhrmöglichkeiten für Reinigungsmittel vorhanden sind, kann eine CIP-Reinigung weiter verbessert werden, da keine Öffnung der Anlage erforderlich ist, um das Reinigungsmittel einzubringen.

Die jeweiligen Zuführmöglichkeiten für ein Reinigungsmittel können dazu ausgebildet sein, das Reinigungsmittel in einem Gasstrom, insbesondere in einem erhitzten Gasstrom, in die Zirkulationsvorrichtung einzubringen.

Alternativ oder zusätzlich können in dem ersten Leitungsabschnitt Sprühköpfe zur Zufuhr des Reinigungsmittels angeordnet sein. Die Verwendung von Sprühköpfen kann die möglichst vollständige Benetzung der zu reinigenden Oberfläche mit Reinigungsmittel insbesondere bei Leitungen mit größeren Durchmessern, beispielsweise bei Leitungen mit einem Nenndurchmesser größer als DN250, verbessern. Damit kann die Reinigung der Leitungsabschnitte weiter verbessert werden.

Es ist weiterhin möglich, dass die Erhitzungsvorrichtung und/oder die Kühlvorrichtung Zu- und /oder Abführmöglichkeiten für Reinigungsmittel aufweisen. Diese Zu- und /oder Abführmöglichkeiten können wie oben beschrieben ausgebildet sein. Es ist auch möglich, dass in der Erhitzungsvorrichtung und/oder in der Kühlvorrichtung Sprühköpfe angeordnet sind.

Als ein Reinigungsmittel kann eine Lauge verwendet werden. Die Konzentration der Lauge kann zwischen 0,1 und 10%, beispielsweise 1,5% betragen. Als ein anderes Reinigungsmittel kann Spülwasser verwendet werden. Als ein weiteres Reinigungsmittel kann eine Säure verwendet werden. Die Konzentration der Säure kann zwischen 0,1 und 10%, beispielsweise 1,5% betragen.

Es ist möglich, dass der CIP-Prozess eine Reinigung mit verschiedenen Reinigungsmitteln umfasst. Dabei können die verschiedenen Reinigungsmittel jeweils über die Zuführmittel und/oder die Sprühköpfe in die Zirkulationsvorrichtung eingebracht werden. Die Reinigungsmittel können weiterhin die Abführmittel aus der Zirkulationsvorrichtung abgeführt werden. Durch die Verwendung von unterschiedlichen Reinigungsmitteln kann eine verbesserte Reinigung erreicht werden.

Die Zuführ- bzw. Abführleitungen und/oder die Sprühköpfe können mit einer CIP-Vorrichtung verbunden sein. Die CIP-Vorrichtung kann ein Teil der Anlage sein. Die CIP-Vorrichtung kann Vorratsbehälter für ein Reinigungsmittel und/oder Spülwasser umfassen. Weiterhin kann die CIP-Vorrichtung Mittel umfassen, um das Reinigungsmittel und/oder Spülwasser zu der Zirkulationsvorrichtung hin und von der Zirkulationsvorrichtung weg zu transportieren. Beispielsweise kann die CIP-Vorrichtung hierzu eine Pumpe, insbesondere eine Kreiselpumpe, umfassen. Die Pumpe kann dazu ausgebildet sein, das Reinigungsmittel während des CIP-Prozesses in der Zirkulationsvorrichtung zu zirkulieren bzw. zu fördern.

Die Anlage kann weiterhin eine erste Absperrvorrichtung umfassen, die zwischen der Kühlvorrichtung und dem ersten Leitungsabschnitt angeordnet ist. Alternativ oder zusätzlich kann die Anlage eine zweite Absperrvorrichtung umfassen, die zwischen dem zweiten Leitungsabschnitt und der Erhitzungsvorrichtung angeordnet ist. Die erste und/oder zweite Absperrvorrichtung können beispielsweise als Schieber, Klappe oder Ventil ausgebildet sein. Prinzipiell eignet sich jede Art von Absperrarmatur, mittels der eine Rohrleitung abgesperrt werden kann, für die Verwendung als erste und/oder zweite Absperrvorrichtung. Die Verwendung der ersten und/oder zweiten Absperrvorrichtung ermöglicht eine zumindest teilweise Trennung der Zirkulationsvorrichtung von dem Rest der Anlage. Dadurch kann eine gezielte Reinigung insbesondere der Zirkulationsvorrichtung ermöglicht werden kann.

Die Verdichtungsvorrichtung kann dazu ausgebildet sein, während des CIP-Prozesses betrieben zu werden. Insbesondere ist es möglich, dass während des CIP-Prozesses ein Kompressor der Verdichtungsvorrichtung betrieben werden kann. Dadurch, dass die Verdichtungsvorrichtung während des CIP-Prozesses betrieben wird, kann ein verbesserter Transport des Reinigungsmittels durch die Zirkulationsvorrichtung erreicht werden.

Die Verdichtungsvorrichtung, insbesondere ein Kompressor der Verdichtungsvorrichtung, kann dazu ausgebildet sein, während des CIP-Prozesses mit einer Drehzahl betrieben zu werden, die geringer ist als eine Drehzahl der Verdichtungsvorrichtung, insbesondere eines Kompressors der Verdichtungsvorrichtung, während der Verdichtung des Dampfes. Mit anderen Worten kann der Verdichtungsvorrichtung, insbesondere ein Kompressor der Verdichtungsvorrichtung, während des CIP-Prozesses mit einer geringeren Drehzahl betrieben werden als während des Normalbetriebs.

Die Verdichtungsvorrichtung, insbesondere ein Kompressor der Verdichtungsvorrichtung, kann dazu ausgebildet ist, während des CIP-Prozesses mit einer Drehrichtung betrieben zu werden, die entgegengesetzt oder gleich zu einer Drehrichtung der Verdichtungsvorrichtung während der Verdichtung des Dampfes ist.

Beispielsweise ist es möglich, dass die Zirkulationsvorrichtung während des CIP-Prozesses im Vorwärtsbetrieb betrieben wird. In diesem Fall kann ein Reinigungsmittel mittels einer Zuführmöglichkeit und/oder mittels Sprühköpfen in dem ersten Reinigungsabschnitt in die Zirkulationsvorrichtung eingebracht werden. Das Reinigungsmittel kann dann in der Zirkulationsvorrichtung von dem ersten Leitungsabschnitt durch die Verdichtungsvorrichtung in den zweiten Leitungsabschnitt geführt werden, wobei der Verdichtungsvorrichtung, insbesondere ein Kompressor der Verdichtungsvorrichtung, in der gleichen Drehrichtung betrieben wird wie im Normalbetrieb. In dem zweiten Leitungsabschnitt kann das Reinigungsmittel dann durch eine geeignete Abführmöglichkeit aus der Zirkulationsvorrichtung abgeleitet werden.

Alternativ ist es möglich, dass die Zirkulationsvorrichtung während des CIP-Prozesses im Rückwärtsbetrieb betrieben wird. In diesem Fall kann ein Reinigungsmittel mittels einer Zuführmöglichkeit und/oder mittels Sprühköpfen in dem zweiten Reinigungsabschnitt in die Zirkulationsvorrichtung eingebracht werden. Das Reinigungsmittel kann dann in der Zirkulationsvorrichtung von dem zweiten Leitungsabschnitt durch die Verdichtungsvorrichtung in den ersten Leitungsabschnitt geführt werden, wobei der Verdichtungsvorrichtung, insbesondere ein Kompressor der Verdichtungsvorrichtung, in der entgegengesetzten Drehrichtung betrieben wird wie im Normalbetrieb. In dem ersten Leitungsabschnitt kann das Reinigungsmittel dann durch eine geeignete Abführmöglichkeit aus der Zirkulationsvorrichtung abgeleitet werden.

Die Anlage kann weiterhin dazu ausgebildet sein, den CIP-Prozess zur Reinigung der Zirkulationsvorrichtung unter Produktionsbedingungen zu ermöglichen. So kann die Anlage dazu ausgebildet sein, ein erhitztes Reinigungsmittel in die Kühlvorrichtung zu leiten. Die Anlage kann hierzu entsprechende Zuführmöglichkeiten für das Reinigungsmittel aufweisen. Das Reinigungsmittel kann dabei insbesondere auf eine Temperatur von 100°C bis 150°C erhitzt werden. Dies kann beispielsweise in der Erhitzungsvorrichtung analog zur Erhitzung des flüssigen Lebensmittels geschehen. Alternativ ist es möglich, dass die CIP-Vorrichtung Möglichkeiten zur Erhitzung des Reinigungsmittels aufweist. Analog zur Abkühlung des flüssigen Lebensmittels kann in der Kühlvorrichtung eine Abkühlung des Reinigungsmittels erfolgen. Je nach verwendetem Reinigungsmittel kann dabei ein Laugen- oder Säurendampf entstehen. Dieser Dampf kann dann analog zu dem Dampf bzw. Brüden im Normalbetrieb durch die Zirkulationsvorrichtung geleitet werden. Durch eine solche Ausbildung der Anlage kann zusätzlich zur Reinigung der Zirkulationsvorrichtung eine Reinigung des Kopfbereichs der Kühlvorrichtung erreicht werden, in dem es ebenfalls zu organischen Ablagerungen aufgrund des Brüdens kommen kann.

Die Anlage kann weiterhin dazu ausgebildet sein, insbesondere nach Durchführung des CIP-Prozesses, ein Sterilisieren aller Komponenten der Zirkulationsvorrichtung, insbesondere ohne Öffnung der Anlage, zu ermöglichen. Dazu kann mittels einer Dampferzeugungsvorrichtung steriler Dampf mit einer hohen Temperatur erzeugt und dann durch die Zirkulationsvorrichtung geleitet werden. Die Temperatur kann beispielsweise mehr als 120°C, insbesondere mehr als 125°C, insbesondere mehr als 135°C betragen. Die Temperatur kann dabei weniger als 150°C betragen. Es ist möglich, dass das Sterilisieren ein Leiten des Dampfes von der Erhitzungsvorrichtung zu dem ersten Leitungsabschnitt umfasst. Dies kann beispielsweise über den Weg Erhitzungsvorrichtung - Kühlvorrichtung - erster Leitungsabschnitt geschehen.

Alternativ ist es möglich, dass hierzu eine Bypass-Leitung zwischen der Erhitzungsvorrichtung und dem ersten Leitungsabschnitt vorhanden ist, die insbesondere im Normalbetrieb der Anlage durch geeignete Absperrarmaturen verschlossen wird. Es ist auch möglich, dass der sterile Dampf über die CIP-Vorrichtung zu den Zu- bzw. Abführmöglichkeiten für Reinigungsmittel in den ersten und/oder zweiten Leitungsabschnitt eingebracht wird. Alternativ ist es möglich, dass der sterile Dampf aus der Kühlvorrichtung in den ersten Leitungsabschnitt geleitet wird.

Es ist möglich, dass die Verdichtungsvorrichtung, insbesondere ein Kompressor der Verdichtungsvorrichtung, während der Sterilisation der Zirkulationsvorrichtung betrieben wird. Durch den Betrieb der Verdichtungsvorrichtung kann der Transport des sterilen Dampfes durch die Zirkulationsvorrichtung verbessert werden.

Die Anlage kann dazu ausgebildet sein, einen Sterilisationsprozess in Vorwärts- oder Rückwärtsrichtung durchzuführen.

Die Anlage kann weiterhin eine Abfüllvorrichtung zum Abfüllen von Behältern mit einem Getränk umfassen, wobei die Abfüllvorrichtung mit der Erhitzungsvorrichtung über mindestens eine Rohrleitung verbunden ist.

Das Verfahren ist ein Verfahren zur Reinigung einer Anlage zur Erhitzung von flüssigen Lebensmitteln, insbesondere zur Direkterhitzung von flüssigen Lebensmitteln, wobei die Anlage eine Erhitzungsvorrichtung, eine Kühlvorrichtung und eine Zirkulationsvorrichtung umfasst, wobei die Zirkulationsvorrichtung eine Verdichtungsvorrichtung zur Verdichtung von Dampf, einen ersten Leitungsabschnitt und einen zweiten Leitungsabschnitt umfasst. Der erste Leitungsabschnitt ist dabei zwischen der Kühlvorrichtung und der Verdichtungsvorrichtung angeordnet und der zweite Leitungsabschnitt ist zwischen der Verdichtungsvorrichtung und der Erhitzungsvorrichtung angeordnet. Das Verfahren umfasst ein Reinigen des ersten Leitungsabschnitts, der Verdichtungsvorrichtung und des zweiten Leitungsabschnitts in einem gemeinsamen Cleaning in Place, CIP, Prozess.

Die Anlage kann bzw. die Komponenten der Anlage können eines oder mehrere der weiter oben beschriebenen Merkmale aufweisen. Die jeweils oben beschriebenen Vorteile der Anlage treten analog auch bei dem erfindungsgemäßen Verfahren auf.

Der CIP-Prozess kann ein Zuführen eines Reinigungsmittels in die Zirkulationsvorrichtung in dem ersten Leitungsabschnitt umfassen. Alternativ kann der CIP-Prozess ein Zuführen des Reinigungsmittels in die Zirkulationsvorrichtung in dem zweiten Leitungsabschnitt umfassen. Mit anderen Worten kann der Fluss des Reinigungsmittels während des CIP-Prozesses in Vorwärts- oder in Rückwärtsrichtung erfolgen.

Das Verfahren kann die Verwendung einer Lauge als ein Reinigungsmittel in dem CIP-Prozess umfassen. Die Konzentration der Lauge, kann zwischen 0,1 und 10%, beispielsweise 1,5% betragen. Als ein anderes Reinigungsmittel kann Spülwasser verwendet werden. Als ein weiteres Reinigungsmittel kann eine Säure verwendet werden. Die Konzentration der Lauge, kann zwischen 0,1 und 10%, beispielsweise 1,5% betragen.

Der CIP-Prozess kann eine Reinigung mit verschiedenen Reinigungsmitteln umfasst. Dabei können die verschiedenen Reinigungsmittel jeweils über die Zuführleitungen und/oder die Sprühköpfe in die Zirkulationsvorrichtung eingebracht werden bzw. über die Abführleitungen aus der Zirkulationsvorrichtung abgeführt werden. Durch die Verwendung von unterschiedlichen Reinigungsmitteln kann eine verbesserte Reinigung erreicht werden.

Insbesondere ist es möglich, dass der CIP-Prozess einen ersten Reinigungsschritt mit einem ersten Reinigungsmittel und einen zweiten Reinigungsschritt mit einem zweiten Reinigungsmittel umfasst. Beispielsweise kann das erste Reinigungsmittel dabei eine Lauge mit den oben beschriebenen Eigenschaften und das zweite Reinigungsmittel eine Säure mit den oben beschriebenen Eigenschaften sein, oder umgekehrt. Es ist möglich, dass der CIP-Prozess nach dem ersten und/oder dem zweiten Reinigungsschritt jeweils einen Spülschritt umfasst, bei dem Spülwasser als Reinigungsmittel verwendet wird.

Der CIP-Prozess kann weiterhin ein Betreiben der Verdichtungsvorrichtung, insbesondere eines Kompressors der Verdichtungsvorrichtung, umfassen. Dabei kann die Verdichtungsvorrichtung, insbesondere ein Kompressor der Verdichtungsvorrichtung, mit einer Drehrichtung betrieben werden, die gleich einer Drehrichtung der Verdichtungsvorrichtung, insbesondere einer Drehrichtung eines Kompressors der Verdichtungsvorrichtung, während der Verdichtung von Dampf ist, wenn das Reinigungsmittel in dem ersten Leitungsabschnitt zugeführt wird. Mit anderen Worten kann die Verdichtungsvorrichtung wie im Normalbetrieb betrieben werden, wenn der CIP-Prozess in Vorwärtsrichtung durchgeführt wird.

Alternativ kann die Verdichtungsvorrichtung, insbesondere ein Kompressor der Verdichtungsvorrichtung, mit einer Drehrichtung betrieben werden, die entgegengesetzt zu einer Drehrichtung der Verdichtungsvorrichtung, insbesondere einer Drehrichtung eines Kompressors der Verdichtungsvorrichtung, während der Verdichtung von Dampf ist, wenn das Reinigungsmittel in dem zweiten Leitungsabschnitt zugeführt wird. Mit anderen Worten kann die Verdichtungsvorrichtung in der entgegengesetzten Richtung wie im Normalbetrieb betrieben werden, wenn der CIP-Prozess in Rückwärtsrichtung durchgeführt wird.

Die Verdichtungsvorrichtung kann während des CIP-Prozesses mit einer Drehzahl betrieben werden, die kleiner als eine Drehzahl der Verdichtungsvorrichtung, insbesondere eine Drehzahl eines Kompressors der Verdichtungsvorrichtung, während der Verdichtung von Dampf ist.

Der CIP-Prozess kann weiterhin ein Absperren des ersten Leitungsabschnitts umfassen. Alternativ oder zusätzlich kann der CIP-Prozess ein Absperren des zweiten Leitungsabschnitts umfassen.

Das Verfahren kann ein Durchführen des CIP-Prozesses unter Produktionsbedingungen umfassen. Dabei kann das Verfahren das Einleiten eines erhitzten Reinigungsmittels in die Kühlvorrichtung umfassen. Das Reinigungsmittel kann dabei insbesondere auf eine Temperatur von 100°C bis 150°C erhitzt werden. Dies kann beispielsweise in der Erhitzungsvorrichtung erfolgen. Alternativ kann das Erhitzen des Reinigungsmittels durch geeignete Mittel in einer CIP-Vorrichtung erfolgen. Analog zur Abkühlung des flüssigen Lebensmittels kann in der Kühlvorrichtung eine Abkühlung des Reinigungsmittels erfolgen. Je nach verwendetem Reinigungsmittel kann dabei ein Laugen- oder Säurendampf entstehen. Der CIP-Prozess kann dann das Leiten des Laugen- oder Säurendampf durch die Zirkulationsvorrichtung umfassen.

Der CIP-Prozess kann in Vorwärtsrichtung oder in Rückwärtsrichtung durchgeführt werden.

Das Verfahren kann weiterhin ein Sterilisieren aller Komponenten der Zirkulationsvorrichtung umfassen. Dazu kann das Verfahren das Erzeugen von sterilem Dampf mit einer hohen Temperatur umfassen. Die Temperatur kann beispielsweise mehr als 120°C, insbesondere mehr als 125°C, insbesondere mehr als 135°C betragen. Die Temperatur kann dabei weniger als 150°C betragen. Weiterhin kann das Verfahren das Leiten des sterilen Dampfes durch die Zirkulationsvorrichtung umfassen. Es ist möglich, dass dies ein Leiten des Dampfes von der Erhitzungsvorrichtung zu dem ersten Leitungsabschnitt umfasst. Dies kann beispielsweise über den Weg Erhitzungsvorrichtung - Kühlvorrichtung - erster Leitungsabschnitt geschehen. Alternativ kann der sterile Dampf durch eine Bypass-Leitung direkt von der Erhitzungsvorrichtung zu dem ersten Leitungsabschnitt geführt werden.

Es ist auch möglich, dass der sterile Dampf über die CIP-Vorrichtung zu den Zu- bzw. Abführmöglichkeiten für Reinigungsmittel in den ersten und/oder zweiten Leitungsabschnitt eingebracht wird. Alternativ ist es möglich, dass der sterile Dampf aus der Kühlvorrichtung in den ersten Leitungsabschnitt geleitet wird.

Das Sterilisieren kann ein Einleiten von Heißwasser in die Erhitzungsvorrichtung und ein weiteres Erhitzen des Heißwassers auf eine hohe Temperatur, insbesondere auf eine Temperatur größer als 120°C, umfassen. Weiterhin kann das Sterilisieren ein Leiten des erhitzten Heißwassers in die Kühlvorrichtung umfassen. In der Kühlvorrichtung kann das erhitzte Heißwasser abgekühlt werden, und der dabei entstehende Dampf kann zur Sterilisation der Kühlvorrichtung und der Zirkulationsvorrichtung verwendet werden.

Der Sterilisationsprozess kann in Vorwärts- oder Rückwärtsrichtung durchgeführt werden.

Es ist möglich, dass die Verdichtungsvorrichtung, insbesondere ein Kompressor der Verdichtungsvorrichtung, während des Sterilisierens betrieben wird. Dabei kann eine Drehrichtung der Verdichtungsvorrichtung, insbesondere eines Kompressors der Verdichtungsvorrichtung, gleich einer Drehrichtung im Normalbetrieb sein, wenn das Sterilisieren in Vorwärtsrichtung durchgeführt wird. Analog kann eine Drehrichtung der Verdichtungsvorrichtung, insbesondere eines Kompressors der Verdichtungsvorrichtung, entgegengesetzt zu einer Drehrichtung im Normalbetrieb sein, wenn das Sterilisieren in Rückwärtsrichtung durchgeführt wird.

Das Verfahren kann weiterhin eine Reinigung der Erhitzungsvorrichtung und/oder der Kühlvorrichtung umfassen. Die Reinigung der Erhitzungsvorrichtung und/oder der Kühlvorrichtung kann zumindest teilweise zeitgleich zu dem CIP-Prozess durchgeführt werden. Dabei kann die Reinigung der Erhitzungsvorrichtung und/oder der Kühlvorrichtung als Teil des CIP-Prozesses ausgeführt werden, oder als separater Reinigungsprozess, der parallel zu dem CIP-Prozess ausgeführt wird.

Ein beispielhaftes Reinigungsverfahren in Vorwärtsrichtung kann einen oder mehrere der folgenden Schritte umfassen:
a) Absperren des ersten Leitungsabschnitts gegenüber der Kühlvorrichtung
b) Einleiten von Spülwasser in den ersten Leitungsabschnitt und Spülen der Zirkulationsvorrichtung, wobei die Zirkulationsvorrichtung in Vorwärtsrichtung betrieben werden kann
c) Ausleiten des Spülwassers in dem zweiten Leitungsabschnitt oder der Erhitzungsvorrichtung
d) Einleiten einer Lauge in den ersten Leitungsabschnitt und Reinigung der Zirkulationsvorrichtung, wobei die Zirkulationsvorrichtung in Vorwärtsrichtung betrieben werden kann
e) Ausleiten der Lauge in dem zweiten Leitungsabschnitt oder der Erhitzungsvorrichtung
f) Wiederholen der Schritte b) und c)
g) Einleiten einer Säure in den ersten Leitungsabschnitt und Reinigung der Zirkulationsvorrichtung, wobei die Zirkulationsvorrichtung in Vorwärtsrichtung betrieben werden kann
h) Ausleiten der Säure in dem zweiten Leitungsabschnitt oder der Erhitzungsvorrichtung
i) Wiederholen der Schritte b) und c)
j) Zufuhr von sterilem, erhitzen Dampf in den ersten Leitungsabschnitt
k) Leiten des sterilen, erhitzen Dampfes durch die Zirkulationsvorrichtung, wobei die Zirkulationsvorrichtung in Vorwärtsrichtung betrieben werden kann

Ein beispielhaftes Reinigungsverfahren in Rückwärtsrichtung kann einen oder mehrere der folgenden Schritte umfassen:
a) Absperren des zweiten Leitungsabschnitts gegenüber der Erhitzungsvorrichtung
b) Einleiten von Spülwasser in den zweiten Leitungsabschnitt und Spülen der Zirkulationsvorrichtung, wobei die Zirkulationsvorrichtung in Rückwärtsrichtung betrieben werden kann
c) Ausleiten des Spülwassers in dem ersten Leitungsabschnitt oder der Kühlvorrichtung
d) Einleiten einer Lauge in den zweiten Leitungsabschnitt und Reinigung der Zirkulationsvorrichtung, wobei die Zirkulationsvorrichtung in Rückwärtsrichtung betrieben werden kann
e) Ausleiten der Lauge in dem ersten Leitungsabschnitt oder der Kühlvorrichtung
f) Wiederholen der Schritte b) und c)
g) Einleiten einer Säure in den zweiten Leitungsabschnitt und Reinigung der Zirkulationsvorrichtung, wobei die Zirkulationsvorrichtung in Rückwärtsrichtung betrieben werden kann
h) Ausleiten der Säure in dem ersten Leitungsabschnitt oder der Kühlvorrichtung
i) Wiederholen der Schritte b) und c)
j) Zufuhr von sterilem, erhitzen Dampf in den ersten Leitungsabschnitt
k) Leiten des sterilen, erhitzen Dampfes durch die Zirkulationsvorrichtung, wobei die Zirkulationsvorrichtung in Vorwärtsrichtung betrieben werden kann

Die Schritte j) und k) können bei den beispielhaften Verfahren zum Zweck der Anlagensterilisation durchgeführt werden. Darüber hinaus können diese beiden Schritte auch dazu verwendet werden, eventuell noch in der Zirkulationsvorrichtung befindliche Flüssigkeit zu entfernen, da diese für einen späteren Betrieb der Verdichtungsvorrichtung nachteilig ist und diese beschädigen kann. Alternativ zu dem in Merkmal j) genannten sterilen erhitzten Dampf kann auch ein anderes steriles Gas wie sterile Luft verwendet werden. Die für ein Entfernen von eventuell noch in der Zirkulationsvorrichtung befindlicher Flüssigkeit kann die benötigte Zeit insbesondere im Vergleich zur für eine Sterilisation benötigte Zeit geringer sein. Beispielsweise kann die benötigte Zeit weniger als 20 min betragen, bevorzugt weniger als 10 min.

Die Erfindung stellt weiterhin ein Verfahren zum Betrieb einer Abfüllanlage bereit, wobei die Abfüllanlage eine Anlage zur direkten Erhitzung eines flüssigen Lebensmittels mit einem oder mehreren der oben beschriebenen Merkmale aufweist. Das Verfahren umfasst ein Reinigungsverfahren für die Anlage zur direkten Erhitzung eines flüssigen Lebensmittels sowie ein Abfüllen von einem in der Erhitzungsvorrichtung erhitzten Lebensmittel in einem Produktionsmodus nach dem Reinigungsverfahren. Dabei kann das Reinigungsverfahren eines oder mehrere der oben beschriebenen Merkmale aufweisen.

### Kurzbeschreibung der Zeichnungen

Weitere Merkmale der Erfindung werden nachfolgend anhand der beispielhaften Figuren erläutert. Dabei zeigt:
- Figur 1: schematisch eine Anlage zur Erhitzung von flüssigen Lebensmitteln;
- Figur 2: schematisch einen ersten CIP-Prozess;
- Figur 3: schematisch einen zweiten CIP-Prozess; und
- Figur 4: schematisch einen Sterilisationsprozess.

### Detaillierte Beschreibung

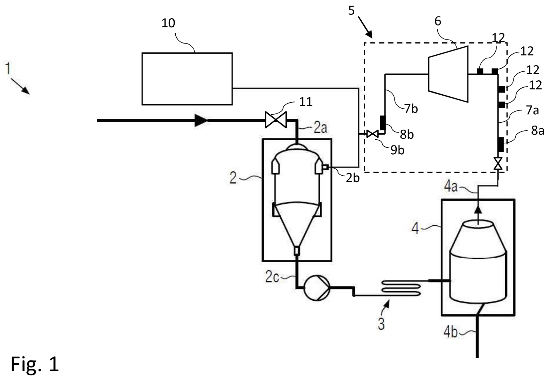

Figur 1 zeigt schematisch eine Anlage 1 zur direkten Erhitzung eines flüssigen Lebensmittels.

Die Anlage 1 umfasst eine Erhitzungsvorrichtung 2 zur direkten Erhitzung eines flüssigen Lebensmittels mit Dampf mit einem Eingang 2a, durch welches ein flüssiges Lebensmittel in die Erhitzungsvorrichtung 2 geführt werden kann. Es ist möglich, dass die Anlage 1 stromaufwärts von der Erhitzungsvorrichtung 2 eine Vorwärmvorrichtung umfasst (in Figur 1 nicht gezeigt), die das flüssige Lebensmittel auf eine Eintrittstemperatur erwärmen kann.

Durch einen weiteren Eingang 2b der Erhitzungsvorrichtung 2 kann der Erhitzungsvorrichtung 2 Dampf zum direkten Erhitzen des flüssigen Lebensmittels zugeführt werden. Durch einen Ausgang 2c der Erhitzungsvorrichtung 2 kann das flüssige Lebensmittel aus der Erhitzungsvorrichtung 2 ausgeführt werden. In der gezeigten Ausführungsform geschieht dies durch die stromabwärts der Erhitzungsvorrichtung 2 beispielhaft eingezeichnete Pumpe geschehen. Eine solche Pumpe kann jedoch auch an anderen Stellen angeordnet sein oder nicht von der Vorrichtung umfasst sein. Die in Figur 1 gezeigte Ausführungsform der Anlage 1 weist eine optionale Heißhaltestrecke 3 auf. In alternativen Ausführungsformen (hier nicht gezeigt) ist keine Heißhaltestrecke vorhanden.

Stromabwärts von der Erhitzungsvorrichtung 2 weist die Anlage 1 eine Kühlvorrichtung 4, in der gezeigten Ausführungsform einen Flash-Kühler 4, auf. In dem Flash-Kühler 4 kann das flüssige Lebensmittel durch Flash-Kühlen (Entspannungskühlen) gekühlt werden. Der dabei entstehende Flash-Dampf bzw. der Brüden kann über einen Ausgang 4a des Flash-Kühlers 4 abgezogen werden. Das flüssige Lebensmittel kann dann durch den Ausgang 4b des Flash-Kühlers 4 aus der Kühlvorrichtung 4 abgeführt werden. Dazu kann die Anlage ebenfalls eine oder mehrere Pumpen umfassen (nicht gezeigt). Die Anlage kann weitere Behandlungsvorrichtungen für das flüssige Lebensmittelprodukt aufweisen, die stromabwärts von dem Ausgang 4b des Flash-Kühlers angeordnet sind. Beispielsweise kann die Anlage eine Kühlvorrichtung, eine Abfüllvorrichtung oder ähnliche Vorrichtungen umfassen (nicht gezeigt).

Der Flash-Kühler 4 kann weiterhin einen hier nicht gezeigten Kondensator bzw. Kühler für den Flash-Dampf umfassen. Dieser kann beispielsweise strömungsleitend mit dem Ausgang 4a verbunden sein. Mit diesem Kondensator bzw. Kühler kann ein Teil des Flash-Dampfs gekühlt und kondensiert werden.

In Figur 1 ist weiter zu sehen, dass die Anlage 1 eine Zirkulationsvorrichtung 5 umfasst, die einen ersten Leitungsabschnitt 7a, eine Verdichtungsvorrichtung 6 und einen zweiten Leitungsabschnitt 6b umfasst. Die Zirkulationsvorrichtung 9 kann ein eigenes Gehäuse umfassen, dies ist aber nicht notwendig. Daher ist die Zirkulationsvorrichtung 9 in Figur 1 mit dem gestrichelten Rechteck angedeutet.

Der erste Leitungsabschnitt 7a, der von dem Flash-Kühler 7 zu der Verdichtungsvorrichtung 6 verläuft, ist eine Niederdruckleitung, die einen größeren Durchmesser aufweisen kann als der zweite Leitungsabschnitt 7b, der von der Verdichtungsvorrichtung 6 zu dem Einlass 2b der Erhitzungsvorrichtung 2 führt, und eine Hochdruckleitung ist. Beispielsweise kann der erste Leitungsabschnitt 7a einen Nenndurchmesser größer oder gleich DN250 aufweisen. Der zweite Leitungsabschnitt 7b kann insbesondere einen Nenndurchmesser kleiner DN250 aufweisen.

Die Verdichtungsvorrichtung 6 weist in der gezeigten Ausführungsform einen Kompressor auf. Es ist aber in anderen Ausführungsformen möglich, dass die Verdichtungsvorrichtung 6 zwei oder mehrere Kompressoren aufweist, die in Reihe angeordnet sind.

Der Flash-Dampf bzw. Brüden bzw. ein Teil des Flash-Dampfs bzw. des Brüdens wird im Betrieb vom Ausgang 4a des Flash-Kühlers 4 durch den ersten Leitungsabschnitt 7a zu der Verdichtungsvorrichtung 6 geleitet und in der Verdichtungsvorrichtung 6 komprimiert, wodurch er erhitzt wird. Von der Verdichtungsvorrichtung 6 wird der erhitzte Dampf bzw. Brüden durch den zweiten Leitungsabschnitt 7b zu dem Eingang 2b der Erhitzungsvorrichtung 2 geleitet, und kann dort zum Erhitzen eines flüssigen Lebensmittels verwendet werden.

Die Anlage 1 weist zudem eine Dampferzeugungsvorrichtung 12 auf, mittels der Wasserdampf, insbesondere steriler Wasserdampf, erzeugt werden kann.

In Figur 1 ist zu sehen, dass der Eingang 2b der Erhitzungsvorrichtung 2 sowohl mit der Dampferzeugungsvorrichtung 12 als auch mit der Zirkulationsvorrichtung 5 verbunden ist. Damit kann sowohl steriler Dampf aus der Dampferzeugungsvorrichtung 12 als auch Flash-Dampf aus dem Flash-Kühler 4 zum Erhitzen des flüssigen Lebensmittels verwendet werden.

Figur 1 zeigt weiterhin schematisch, dass die Anlage 1 Zu- und Abführmöglichkeiten 8a für ein Reinigungsmittel in den ersten Leitungsabschnitt 7a umfasst. Die Zu- und Abführmöglichkeiten 8a sind über Leitungen mit einer in Figur 1 nicht gezeigten CIP-Anlage verbunden. Durch die Zu- und Abführmöglichkeiten 8a kann ein Reinigungsmittel in den ersten Leitungsabschnitt 7a eingebracht werden. Im ersten Leitungsabschnitt 7a sind weiterhin Sprühköpfe 12 angeordnet. Die Sprühköpfe 12 sind ebenfalls mit der nicht gezeigten CIP-Anlage verbunden.

Analog umfasst die Anlage 1 Zu- und Abführmöglichkeiten 8b für ein Reinigungsmittel in den zweiten Leitungsabschnitt 7b. Die Zu- und Abführmöglichkeiten 8b sind über Leitungen mit der nicht gezeigten CIP-Anlage verbunden. Durch die Zu- und Abführmöglichkeiten 8b kann ein Reinigungsmittel in den zweiten Leitungsabschnitt 7b eingebracht werden.

Die in Figur 1 gezeigte Anlage 1 umfasst weiterhin Absperrarmaturen 9a und 9b. Mit der Absperrarmatur 9a kann der erste Leitungsabschnitt 7a gegenüber dem Flash-Kühler 4 gesperrt werden. Mit der Absperrarmatur 9b kann der zweite Leitungsabschnitt 7b gegenüber der Erhitzungsvorrichtung 2 gesperrt werden.

Zusätzlich ist in Figur 1 zu sehen, dass die Anlage 1 ein Ventil 11 aufweist, mit dem die Erhitzungsvorrichtung 2 gegenüber den stromaufwärts von dem Eingang 2a gelegenen Teil der Anlage 1 gesperrt werden kann.

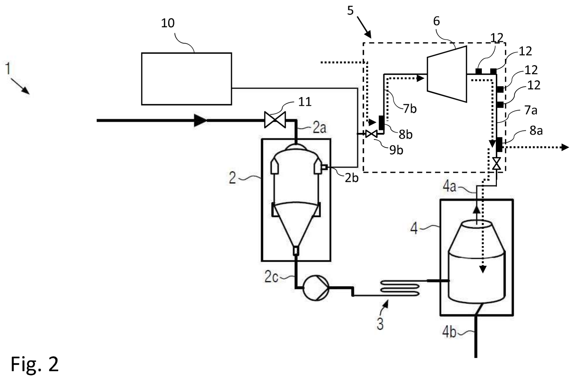

Figur 2 zeigt schematisch den Ablauf eines beispielhaften CIP-Prozesses. Dabei ist der Fluss eines Reinigungsmittels mit den gepunkteten Pfeillinien angedeutet.

Zunächst wird die Absperrarmatur 9b geschlossen, so dass der zweite Leitungsabschnitt 7b gegenüber der Erhitzungsvorrichtung 2 gesperrt ist. Dann wird über den Vorlauf der nicht gezeigten CIP-Vorrichtung das Reinigungsmittel durch die Zuführmöglichkeit 8b in den zweiten Leitungsabschnitt 7b eingeführt. Dies kann beispielsweise durch Transport des Reinigungsmittels in einem erhitzten Gasstrom und eine Injektion in den zweiten Leitungsabschnitt 7b geschehen. Das Reinigungsmittel wird dann von der Zuführmöglichkeit 8b in Richtung der Verdichtungsvorrichtung 6 geführt. Dies kann beispielsweise durch eine in Figur 2 nicht gezeigte Pumpe, beispielsweise eine Kreiselpumpe, erfolgen. Alternativ oder ergänzend kann über die Sprühköpfe 12 zusätzlich Reinigungsmittel in den ersten Leitungsabschnitt zugegeben werden. Dies verbessert nochmals die Reinigungswirkung im ersten Leitungsabschnitt.

Während des CIP-Prozesses wird der Kompressor der Verdichtungsvorrichtung 6 entgegen seiner normalen Drehrichtung, also der Drehrichtung im Normalbetrieb, betrieben, so dass der Fluss des Reinigungsmittels durch die Verdichtungsvorrichtung 6 unterstützt wird. Nachdem das Reinigungsmittel durch die Verdichtungsvorrichtung 6 geflossen ist, wird es durch den ersten Leitungsabschnitt 7a geleitet. Da der Durchmesser des ersten Leitungsabschnitts 7a größer als der der zweiten Leitungsabschnitts 7b ist, wird zusätzliches Reinigungsmittel durch die Sprühköpfe 12 in den ersten Leitungsabschnitt 7a eingebracht, um eine vollständige Benetzung der Oberfläche zu erreichen.

Zuletzt wird das Reinigungsmittel entweder über den Flash-Kühler 4a oder über die Abführmöglichkeiten 8a abgeführt. Wie anhand Figur 2 zu erkennen ist, wird der in Figur 2 gezeigte CIP-Prozess in Rückwärtsrichtung durchgeführt.

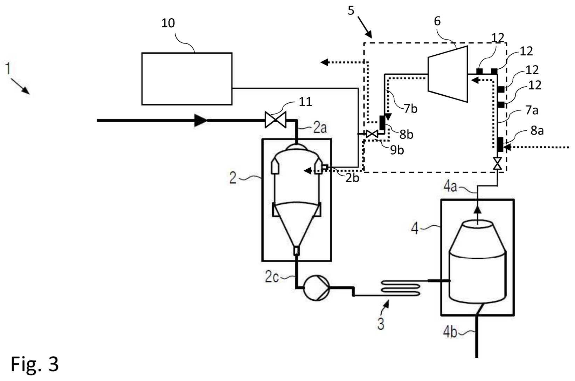

Figur 3 zeigt schematisch den Ablauf eines alternativen CIP-Prozesses, der im Gegensatz zu dem in Figur 2 gezeigten CIP-Prozess in Vorwärtsrichtung durchgeführt wird.

Zunächst wird die Absperrarmatur 9b geschlossen, so dass der Leitungsabschnitt 7a gegenüber dem Flash-Kühler 4 gesperrt ist. Dann wird über den Vorlauf der nicht gezeigten CIP-Vorrichtung das Reinigungsmittel durch die Zuführmöglichkeit 8a in den ersten Leitungsabschnitt 7a eingeführt. Dies kann beispielsweise durch Transport des Reinigungsmittels in einem erhitzten Gasstrom und eine Injektion in den zweiten Leitungsabschnitt 7a geschehen. Zudem wird zusätzliches Reinigungsmittel durch die Sprühköpfe 12 in den ersten Leitungsabschnitt 7a eingebracht, um eine vollständige Benetzung der Oberfläche zu erreichen.

Das Reinigungsmittel wird dann von der Zuführmöglichkeit 8a und den Sprühköpfen 12 in Richtung der Verdichtungsvorrichtung 6 geführt. Dies kann beispielsweise ebenfalls durch eine in Figur 3 nicht gezeigte Pumpe, beispielsweise eine Kreiselpumpe, erfolgen.

Während des CIP-Prozesses wird der Kompressor der Verdichtungsvorrichtung 6 mit seiner normalen Drehrichtung betrieben, so dass der Fluss des Reinigungsmittels durch die Verdichtungsvorrichtung 6 unterstützt wird. Nachdem das Reinigungsmittel durch die Verdichtungsvorrichtung 6 geflossen ist, wird es durch den zweiten Leitungsabschnitt 7b geleitet.

Zuletzt wird das Reinigungsmittel entweder über die Erhitzungsvorrichtung 2 oder über die Abführmöglichkeiten 8b abgeführt.

Bei einer alternativen Ausführungsform des CIP-Prozesses in Vorwärtsrichtung ist es möglich, dass ein erhitztes Reinigungsmittel in die Kühlvorrichtung 4 eingebracht und dort abgekühlt wird. Der mit dem Reinigungsmittel versetzte entstehende Dampf wird dann durch den Ausgang 4a in den ersten Leitungsabschnitt 7a geleitet. Der Prozess setzt sich danach wie in Figur 3 gezeigt fort.

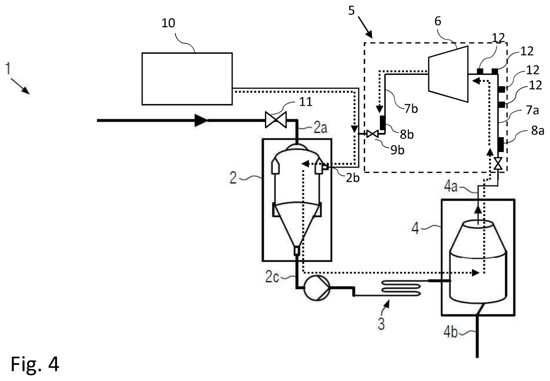

Figur 4 zeigt schematisch den Ablauf eines beispielhaften Sterilisationsprozesses. Dabei ist der Fluss von sterilem Dampf mit den gepunkteten Pfeillinien angedeutet. Es ist zu erkennen, dass der Sterilisationsprozess in Vorwärtsrichtung durchgeführt wird.

Hierzu wird der Erhitzungsvorrichtung 2 über den Eingang 2a Heißwasser zugeführt. Zeitgleich wird Dampf über die Dampferzeugungsvorrichtung 10 in die Erhitzungsvorrichtung 2 eingeleitet, um das Heißwasser auf eine für die Sterilisation der Anlage erforderliche Temperatur erhitzen. Diese Temperatur beträgt insbesondere mindestens 120°C, beispielsweise 135°C. Das Heißwasser wird dann über die Heißhaltestrecke 3 in den Flash-Kühler 4 geführt, über den Ausgang 4b abgeführt und einer weiteren, hier nicht dargestellten Kühlvorrichtung (beispielsweise einem Wärmetauscher) zugeführt, um diese ebenfalls zu sterilisieren. Bevorzugt wird dieses Heißwasser nach Verlassen der Kühlvorrichtung wieder in einem Kreislauf in den Eingang 2a der Erhitzungsvorrichtung geleitet. Der beim Einleiten des Heißwassers in den Flash-Kühler 4 entstehende Dampf wird zur Sterilisation des Kopfraums im Flash-Kühler, sowie des Ausgang 4a, dem ersten Leitungsabschnitt 7a, der Verdichtungsvorrichtung 6 sowie dem zweiten Leitungsabschnitt 7a geführt. Der sterile Dampf kann dann durch die Abfuhrmöglichkeiten 8b abgeführt werden. Der besseren Übersicht halber ist der Fluss des Heißwassers nicht explizit in Figur 4 gezeigt.

Bei einer alternativen Ausführungsform (nicht gezeigt) des Sterilisationsprozesses ist es möglich, dass steriler Dampf über eine (in den Figuren nicht gezeigte) Bypass-Leitung von der Erhitzungsvorrichtung 2 direkt zu dem ersten Leitungsabschnitt 7a geführt wird, dass also die Kühlvorrichtung 4 umgangen wird.

## Patentansprüche

1. Anlage (1) zur Erhitzung von flüssigen Lebensmitteln, insbesondere zur Direkterhitzung von flüssigen Lebensmitteln, umfassend:
eine Erhitzungsvorrichtung (2), die dazu ausgebildet ist, ein flüssiges Lebensmittel mittels Dampf zu erhitzen;
eine Kühlvorrichtung (4), die dazu ausgebildet ist, das erhitzte flüssige Lebensmittel, insbesondere durch Flash-Kühlen, abzukühlen;
eine Zirkulationsvorrichtung (5), die dazu ausgebildet ist, bei der Abkühlung des flüssigen Lebensmittels entstehenden Dampf zumindest teilweise von der Kühlvorrichtung (4) zu der Erhitzungsvorrichtung (2) zu führen, wobei die Zirkulationsvorrichtung (5) umfasst:
eine Verdichtungsvorrichtung (6) zum Verdichten des Dampfes;
einen ersten Leitungsabschnitt (7a), der zwischen der Kühlvorrichtung (4) und der Verdichtungsvorrichtung (6) angeordnet ist; und
einen zweiten Leitungsabschnitt (7b), der zwischen der Verdichtungsvorrichtung (6) und der Erhitzungsvorrichtung (2) angeordnet ist;
wobei die Anlage so ausgebildet ist, dass alle Komponenten der Zirkulationsvorrichtung (5) in einem gemeinsamen Cleaning in Place, CIP, Prozess gereinigt werden können.

2. Anlage (1) gemäß Anspruch 1, weiterhin umfassend eine Zufuhrmöglichkeit (8a) und/oder eine Abführmöglichkeit (8a) für ein Reinigungsmittel in den ersten Leitungsabschnitt (7a) und/oder umfassend eine Zufuhrmöglichkeit (8b) und/oder eine Abführmöglichkeit (8b) für ein Reinigungsmittel in den zweiten Leitungsabschnitt (7a).

3. Anlage (1) gemäß Anspruch 1 oder Anspruch 2, umfassend eine erste Absperrvorrichtung (9a), die zwischen der Kühlvorrichtung (4) und dem ersten Leitungsabschnitt (7a) angeordnet ist und/oder umfassend eine zweite Absperrvorrichtung (9b), die zwischen dem zweiten Leitungsabschnitt (7b) und der Erhitzungsvorrichtung (2) angeordnet ist.

4. Anlage (1) gemäß einem der vorhergehenden Ansprüche, wobei die Verdichtungsvorrichtung (6) dazu ausgebildet ist, während des CIP-Prozesses betrieben zu werden.

5. Anlage (1) gemäß Anspruch 4, wobei die Verdichtungsvorrichtung (6), insbesondere ein Kompressor der Verdichtungsvorrichtung (6), dazu ausgebildet ist, während des CIP-Prozesses mit einer Drehzahl betrieben zu werden, die geringer als eine Drehzahl der Verdichtungsvorrichtung (6), insbesondere eine Drehzahl eines Kompressors der Verdichtungsvorrichtung (6), während der Verdichtung des Dampfes ist.

6. Anlage (1) gemäß Anspruch 4 oder Anspruch 5, wobei die Verdichtungsvorrichtung (6), insbesondere ein Kompressor der Verdichtungsvorrichtung (6), dazu ausgebildet ist, während des CIP-Prozesses mit einer Drehrichtung betrieben zu werden, die entgegengesetzt oder gleich zu einer Drehrichtung der Verdichtungsvorrichtung (6), insbesondere einer Drehrichtung eines Kompressors der Verdichtungsvorrichtung (6), während der Verdichtung des Dampfes ist.

7. Anlage (1) gemäß einem der vorhergehenden Ansprüche, weiterhin umfassend eine Abfüllvorrichtung zum Abfüllen von Behältern mit einem Getränk, wobei die Abfüllvorrichtung mit der Erhitzungsvorrichtung (2) über mindestens eine Rohrleitung verbunden ist.

8. Verfahren zur Reinigung einer Anlage (1) zur Erhitzung von flüssigen Lebensmitteln, insbesondere zur Direkterhitzung von flüssigen Lebensmitteln,
wobei die Anlage (1) eine Erhitzungsvorrichtung (2), eine Kühlvorrichtung (4) und eine Zirkulationsvorrichtung (5) umfasst,
wobei die Zirkulationsvorrichtung (5) eine Verdichtungsvorrichtung (6) zur Verdichtung von Dampf, einen ersten Leitungsabschnitt (7a) und einen zweiten Leitungsabschnitt (7b) umfasst, und
wobei der erste Leitungsabschnitt (7a) zwischen der Kühlvorrichtung (4) und der Verdichtungsvorrichtung (6) angeordnet ist und der zweite Leitungsabschnitt (10) zwischen der Verdichtungsvorrichtung (6) und der Erhitzungsvorrichtung (2) angeordnet ist,
wobei das Verfahren umfasst:
Reinigen aller Komponenten der Zirkulationsvorrichtung (5) in einem gemeinsamen Cleaning in Place, CIP, Prozess.

9. Verfahren gemäß Anspruch 8, wobei der CIP-Prozess umfasst:
Zuführen eines Reinigungsmittels in die Zirkulationsvorrichtung (5) in dem ersten Leitungsabschnitt (7a), oder
Zuführen des Reinigungsmittels in die Zirkulationsvorrichtung (5) in dem zweiten Leitungsabschnitt (7b).

10. Verfahren gemäß Anspruch 9, wobei der CIP-Prozess weiterhin umfasst:
Betreiben der Verdichtungsvorrichtung (6), insbesondere eines Kompressors der Verdichtungsvorrichtung (6),
wobei die Verdichtungsvorrichtung (6), insbesondere ein Kompressor der Verdichtungsvorrichtung (6), mit einer Drehrichtung betrieben wird, die gleich einer Drehrichtung der Verdichtungsvorrichtung (6), insbesondere einer Drehrichtung eines Kompressors der Verdichtungsvorrichtung (6), während der Verdichtung von Dampf ist, wenn das Reinigungsmittel in dem ersten Leitungsabschnitt (7a) zugeführt wird, und
wobei die Verdichtungsvorrichtung (6), insbesondere ein Kompressor der Verdichtungsvorrichtung (6), mit einer Drehrichtung betrieben wird, die entgegengesetzt zu einer Drehrichtung der Verdichtungsvorrichtung (6), insbesondere einer Drehrichtung eines Kompressors der Verdichtungsvorrichtung, während der Verdichtung von Dampf ist, wenn das Reinigungsmittel in dem zweiten Leitungsabschnitt (7b) zugeführt wird.

11. Verfahren gemäß Anspruch 10, wobei die Verdichtungsvorrichtung (6), insbesondere ein Kompressor der Verdichtungsvorrichtung (6), mit einer Drehzahl betrieben wird, die kleiner als eine Drehzahl der Verdichtungsvorrichtung (6), insbesondere eines Kompressors der Verdichtungsvorrichtung (6), während der Verdichtung von Dampf ist.

12. Verfahren gemäß einem der Ansprüche 8 bis 11, wobei der CIP-Prozess umfasst:
Absperren des ersten Leitungsabschnitts (7a) und/oder Absperren des zweiten Leitungsabschnitts (7b).

13. Verfahren gemäß einem der Ansprüche 8 bis 12, weiterhin umfassend:
Sterilisieren aller Komponenten der Zirkulationsvorrichtung (5),
insbesondere, wobei die Verdichtungsvorrichtung (6) während des Sterilisierens betrieben wird.

14. Verfahren gemäß Anspruch 13, wobei das Sterilisieren ein Einleiten von Dampf in den ersten Leitungsabschnitt (7a) umfasst.

15. Verfahren gemäß einem der Ansprüche 8 bis 14, weiterhin umfassend eine Reinigung der Erhitzungsvorrichtung (2) und/oder der Kühlvorrichtung (4), wobei die Reinigung der Erhitzungsvorrichtung (2) und/oder der Kühlvorrichtung (4) zumindest teilweise zeitgleich zu dem CIP-Prozess durchgeführt wird.
